Europäisches Patentamt

European Patent Office

Office européen des brevets

(11) EP 0 820 806 B1

(19)

(12) # FASCICULE DE BREVET EUROPEEN

(45) Date de publication et mention
de la délivrance du brevet:
**14.05.2003 Bulletin 2003/20**

(51) Int Cl.[7]: **B01J 8/00**, B01J 8/18,
B01J 8/22, C10G 2/00

(21) Numéro de dépôt: **97401637.0**

(22) Date de dépôt: **08.07.1997**

(54) **Procédé pour le fonctionnement d'une colonne à bulles triphasique avec application en synthèse fischer-tropsch**

Verfahren mit einer Gas-Flüssig-Blasenkolonne und Anwendung zu einer Fischer-Tropsch Synthese

Process with a slurry bubble column and use for Fischer-Tropsch synthesis

(84) Etats contractants désignés:
**GB IT NL SE**

(30) Priorité: **26.07.1996 FR 9609552**

(43) Date de publication de la demande:
**28.01.1998 Bulletin 1998/05**

(73) Titulaires:
- **INSTITUT FRANCAIS DU PETROLE**
  **92502 Rueil-Malmaison (FR)**
- **Eni S.P.A.**
  **Roma (IT)**

(72) Inventeurs:
- **Casanave, Dominique**
  **69100 Villeurbanne (FR)**
- **Galtier, Pierre**
  **38209 Vienne Cedex (FR)**
- **Viltard, Jean-Charles**
  **26000 Valence (FR)**

(56) Documents cités:
**US-A- 3 754 993**     **US-A- 3 901 660**
**US-A- 4 139 352**     **US-A- 4 589 927**

**EP 0 820 806 B1**

**Description**

La présente invention concerne un procédé permettant de faire fonctionner de manière optimale une colonne à bulles triphasique ("slurry bubble column" en anglais), contenant trois phases, soit une phase liquide, une phase solide et une phase gazeuse. Dans une telle colonne, les particules sont maintenues en suspension dans le liquide par introduction de bulles de gaz à proximité de la partie basse de la colonne. le procédé est mis en oeuvre dans un dispositif permettant le fonctionnement de la colonne à bulles dans des conditions optimales. L'invention a également pour objet l'application de ce procédé et de cet appareil pour la synthèse d'hydrocarbures essentiellement linéaires et saturés, de préférence ayant au moins 5 atomes de carbone dans leur molécule, par réduction de gaz de synthèse $CO$-$(CO_2$-$)H_2$, c'est-à-dire de mélange de monoxyde de carbone d'oxyde et d'hydrogène, et éventuellement de dioxyde de carbone, selon le procédé Fischer-Tropsch. La présente invention s'applique plus particulièrement aux réactions exothermiques se produisant à température élevée par exemple au-dessus de 100 °C et le plus souvent au-dessus de 150 °C, et généralement sous une pression absolue supérieure à 0,1 mégapascal (MPa) et souvent supérieure à 0,5 MPa. Parmi ces réactions on peut citer les hydrogénations, les aromatisations, l'hydrodésulfuration, l'hydrodénitrogénation, les hydrotraitements en particulier les hydrotraitements de résidus, ainsi que l'hydroformylation. Ces réactions sont décrites par exemple dans le livre de J.F. LePage publié aux éditions Technip en 1987 sous le titre "Applied Heterogeneous Catalysis". La présente invention s'applique bien en particulier aux réactions d'hydrogénation. L'invention a été développée pour son application à l'hydrogénation du monoxyde de carbone à laquelle elle s'applique particulièrement bien et qui constitue le domaine d'application préféré de la présente invention.

Les colonnes à bulles comprennent un milieu liquide contenant en suspension des particules solides, généralement en majeure partie des particules catalytiques, et comporte au moins un moyen d'introduction d'au moins une phase gazeuse de réactifs par l'intermédiaire d'au moins un moyen de distribution qui produit des bulles de gaz ayant habituellement un diamètre relativement faible soit (à titre indicatif) généralement de 0,5 à 20 mm de diamètre. Ces bulles de gaz montent dans la colonne et les réactifs sont absorbés par le liquide et diffusent vers le catalyseur au contact duquel les réactifs sont convertis en produits gazeux et/ou liquides suivant les conditions de la réaction et le type de catalyseur. Les produits gazeux comprenants les réactifs gazeux non convertis et les produits gazeux formés au cours de la réaction sont collectés à proximité du sommet de la colonne et la suspension contenant le liquide servant à former la suspension du catalyseur et les produits liquides formés au cours de la réaction est récupérée par une ligne située à un niveau situé à proximité du niveau supérieur de la suspension dans la colonne. Les particules solides sont ensuite séparées du liquide par tout moyen bien connu de l'homme du métier, par exemple par filtration, pour récupérer les produits liquides formés au cours de la réaction.

Dans le cas de réactions fortement exothermiques comme la synthèse Fischer-Tropsch, les colonnes à bulles utilisées comme réacteur opérant en slurry sont généralement préférées aux réacteurs opérant en lit fixe En particulier on obtient à l'aide de cette technique de meilleurs coefficients de transfert de chaleur, une meilleure homogénéité de la température et de faibles pertes de charge. Cette technologie de réacteur présente cependant un inconvénient majeur connu de l'homme du métier : la productivité du catalyseur est limitée, en particulier dès que l'on augmente le diamètre des réacteurs ou la vitesse linéaire des gaz.

La suite de la description est effectuée en liaison avec la synthèse d'hydrocarbures selon le procédé Fischer-Tropsch sans que cela ne doive être considéré comme une limitation de l'invention.

Dans le cadre d'une telle synthèse d'hydrocarbures, il est connu de l'homme du métier deux types différents de mise en oeuvre comme cela est décrit dans de nombreux brevets et en particulier dans les brevets EP-B-450.861 et EP-B-450.860. Ces deux types de mises en oeuvre sont d'une part l'utilisation de réacteurs à agitation totale continue ou réacteurs parfaitement agités et d'autre part l'utilisation de réacteurs à écoulement piston. La grande différence entre ces deux types de mises en oeuvre est la concentration des réactifs qui fournit la force motrice pour la réaction. Dans le système à agitation totale continue la concentration des réactifs est la même en tout point du réacteur alors que dans le système piston la concentration des réactifs diminue régulièrement le long du lit catalytique de l'entrée du réacteur vers la sortie du réacteur et la vitesse de réaction est obtenue en intégrant la fonction de vitesse de l'entrée à la sortie.

Dans une réaction de synthèse d'hydrocarbures, la vitesse de conversion du monoxyde de carbone et la sélectivité du produit dépendent de la pression partielle des réactifs que sont l'hydrogène et le monoxyde de carbone, et dans certain cas, des produits, par exemple de l'eau en contact avec le catalyseur. Les caractéristiques de mélange du réacteur sont donc très importantes pour déterminer les performances du catalyseur. Elles permettent en effet de connaître la composition de la phase gazeuse en un point particulier quelconque du réacteur.

L'utilisation de colonne à bulles pour effectuer une réaction très exothermique telle que la synthèse d'hydrocarbures par réduction catalytique du monoxyde de carbone présente un avantage certain au niveau de l'élimination des calories par échange de chaleur au moins en partie par le liquide servant à la mise en suspension des particules solides de catalyseur.

Dans la technique antérieure, telle que par exemple elle est décrite dans le brevet EP-450860, il est impéra-

EP 0 820 806 B1

tivement recommandé de maintenir le catalyseur à l'état fluidisé au sein du liquide. Dans ce cas le maintien des particules à l'état fluidisé nécessite un contrôle adéquat de l'introduction des bulles de gaz et de leur bonne répartition au sein du réacteur de manière à éviter d'une part le rétromélange (des fractions solide et liquide, induit par la fraction gazeuse) et d'autre part la décantation des particules solides. Toutefois si la dispersion des bulles de gaz est trop importante le réacteur change de mode de fonctionnement et se rapproche du mode de fonctionnement d'un réacteur parfaitement agité. Le contrôle de la vitesse du gaz en liaison avec le diamètre du réacteur qui sont deux paramètres jouant sur la dispersion des bulles de gaz est donc primordial.

La présente invention concerne un procédé permettant d'améliorer de façon importante la productivité du catalyseur choisi pour effectuer la réaction. On a découvert que l'expansion du catalyseur et l'uniformité de sa concentration peut être augmentée et par conséquent que la sélectivité ainsi que la productivité du catalyseur peuvent être améliorées et également le transfert de chaleur facilité, par recyclage d'une partie de la suspension qui sera réintroduite à proximité d'une extrémité de la colonne opposée à l'extrémité à partir de laquelle la suspension a été extraite de la colonne, induisant ainsi une vitesse liquide diminuant la décantation des particules solides et le rétromélange.

La description du brevet EP-B-450860 dissuade l'homme du métier d'utiliser une recirculation de liquide car elle implique, dans le cas d'une recirculation assistée mécaniquement, l'ajout de pompes et de filtres supplémentaires qui influent sur les coûts d'investissement et de fonctionnement et qui compliquent la mise en oeuvre du procédé.

On a découvert que l'avantage de la recirculation notamment en terme de gain de productivité est suffisamment important dans le cas d'une recirculation assistée mécaniquement à l'aide de pompes, pour que celle-ci-soit envisagée, contrairement à ce qu'affirme la description du brevet EP-B-450.860.

La présente invention concerne un procédé mit en oeuvre dans un dispositif comprenant un réacteur sensiblement vertical contenant une suspension d'au moins un solide formé au moins en partie de particules catalytiques dans au moins un liquide comportant au moins un moyen d'introduction de gaz généralement sous forme de bulles à proximité de l'extrémité inférieure dudit réacteur, au moins un moyen de soutirage de gaz à proximité de l'extrémité supérieure dudit réacteur, au moins un moyen de soutirage d'au moins une partie de la suspension à proximité du niveau le plus haut de la fraction liquide de ladite suspension dans ledit réacteur, ledit dispositif comprenant au moins un moyen de recirculation d'au moins une partie de la fraction liquide de ladite suspension et éventuellement de la fraction solide de ladite suspension permettant d'obtenir une vitesse de circulation de la suspension UI au sein du réacteur au moins égale et de préférence supérieure à la vitesse de sédimentation Us des particules solides.

Ainsi le dispositif utilisé dans le procédé selon la présente invention peut comporter le recyclage que la fraction liquide de la suspension essentiellement exempte de la fraction solide de la suspension. Dans ce cas la fraction solide est séparée et peut être également recyclée séparément au moins en partie, de préférence en majeure partie, le plus souvent après réactivation des particules de catalyseur. Mais la fraction solide séparée peut aussi être tout simplement en partie, de préférence en majeure partie, stockée ou détruite.

Le dispositif utilisé dans le procédé selon la présente invention peut aussi comporter le recyclage d'au moins une partie, de préférence la majeure partie, des fractions liquide et solide de la suspension.

La recirculation qui peut être interne ou externe (par rapport au réacteur) est une recirculation induite par la différence de densité entre la suspension (le "slurry") aérée par la phase gaz et le "slurry" recirculé non aéré. La recirculation non assistée mécaniquement est parfois dénommée recirculation naturelle. La vitesse UI de la suspension en circulation dans le réacteur est de préférence supérieure à 0,5 cm/s et habituellement d'environ 0,5 cm/s à environ 20 m/s, de préférence d'environ 1 cm/s à environ 10 m/s et de façon encore plus préférée d'environ 1 cm/s à environ 5 m/s.

Pour opérer la colonne à bulles avec une recirculation interne du slurry, un cylindre directeur ("draft tube") est inséré à l'intérieur de la colonne à bulles. Dans ce cas, la circulation du liquide n'est pas assistée mécaniquement : elle est seulement induite par la différence de densité existant entre le "slurry" aéré par la phase gazeuse et le "slurry" non aéré après désengagement des bulles (effet gazosiphon). Pour ce type d'opération, la distribution des gaz peut se faire à l'intérieur ou à l'extérieur du cylindre directeur et des surfaces d'échange de chaleur peuvent être insérés à l'intérieur et à l'extérieur de ce cylindre afin d'évacuer les calories de la réaction.

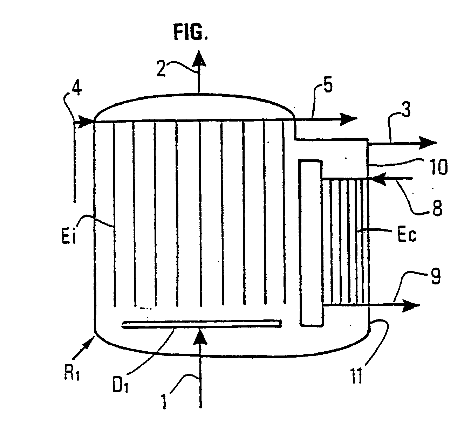

Pour opérer la colonne à bulles avec une recirculation externe du slurry, cas schématisé sur la figure, la conduite de recyclage a des dimensions relativement importantes et suffisantes pour assurer cette recirculation naturelle. Cette conduite aura par exemple un volume au moins égal à au moins le dixième du volume du réacteur et de préférence au moins égale au quart de ce volume.

Le dispositif utilisé dans le procédé selon la présente invention comporte au moins un échangeur de chaleur situé à l'intérieur du reacteur et au moins un échangeur de chaleur à l'extérieur du reacteur sur la conduite de recirculation de la suspension. Selon cette réalisation comme schématisé sur la figure cette conduite peut comporter une calandre de dimensions plus importantes et de préférence suffisantes pour permettre la mise en place dans cette calandre d'un faisceau de tubes d'échange de chaleur.

Dans le cas d'une recirculation externe établie de façon naturelle (effet gazosiphon), le débit de liquide recir-

3

culé dépend non seulement de la différence de densité entre le slurry aéré et le slurry recirculé, mais aussi de l'ensemble des pertes de charge de l'installation. On opère de préférence à co-courant de gaz et de liquide.

Dans le cas d'une recirculation externe établie de façon naturelle le calcul de l'échangeur de chaleur qui peut se situer à l'intérieur de la colonne à bulles et/ou dans la boude de recyclage est donc très important : le design d'un échangeur de chaleur pour lequel les pertes de charge sont faibles permet de recirculer une très forte quantité de slurry (entre 1 et 80 000 m$^3$/h) et d'atteindre des vitesses linéaires de la phase liquide importantes (souvent d'environ 0,5 cm/s à 1 m/s).

Dans la réalisation de l'invention le réacteur, comporte au moins un échangeur de chaleur interne. Le dispositif utilisé dans le procédé selon l'invention comprend au moins un échangeur de chaleur interne au réacteur et au-moins un échangeur de chaleur dans la boucle de recirculation, ce dernier étant soit inclus dans l'enceinte du réacteur dans le cas d'un dispositif comprenant un moyen de recirculation naturelle interne au réacteur, soit externe dans les autres cas.

Cette recirculation du slurry permet dans tous les cas d'améliorer la productivité du catalyseur, par rapport au mode opératoire classique bien connu de l'homme du métier qui consiste à opérer avec une phase liquide stagnante comme cela est montré dans l'exemple 2 ci-après. Les performances du réacteur opéré de la façon décrite dans la présente invention sont largement améliorées probablement pour les raisons suivantes : la convection du liquide permet tout d'abord de réduire de façon notable le degré de rétromélange; la productivité du catalyseur augmente; la mise en suspension du catalyseur est plus uniforme; Les coefficients de transfert de chaleur et de masse sont améliorés.

L'invention concerne un procédé permettant de faire fonctionner de manière optimale un réacteur triphasique à bulles contenant une suspension de particules solides au sein d'un liquide caractérisé en ce que l'on injecte, sous forme de bulles, à proximité de l'extrémité inférieure dudit réacteur une phase gazeuse contenant le (ou les) réactif(s) nécessaire(s) à la production des produits recherchés et on recircule au moins une partie, de préférence la majeure partie, de la fraction liquide et éventuellement de la fraction solide de ladite suspension prélevée à proximité d'une extrémité dudit réacteur et réintroduite à proximité de l'autre extrémité dudit réacteur avec une vitesse du liquide Ul au sein du réacteur au moins égale et de préférence supérieure à la vitesse de sédimentation Us des particules solides.

L'invention concerne un procédé tel que defini dans la revendication 1.

Selon un mode de réalisation, le procédé selon l'invention comprend la recirculation d'une partie, de préférence la majeure partie, de la suspension c'est-à-dire des fractions solide et liquide de la suspension.

La vitesse Ul de la suspension en circulation est d'environ 1 cm/s à environ 5 m/s.

Dans le cas de réalisation préférée de la présente invention qui concerne la synthèse d'hydrocarbures par réduction du monoxyde de carbone les particules solides sont au moins en partie des particules d'un catalyseur bien connu de l'homme du métier pour catalyser cette réaction. Tout catalyseur de synthèse Fischer-Tropsch, de préférence à base de fer ou de cobalt peut être utilisé. On utilise de préférence des catalyseurs à base de cobalt dans lesquels le cobalt est présent en quantité suffisante pour être catalytiquement actif pour la synthèse Fischer-Tropsch. Habituellement, les concentrations de cobalt peuvent être d'au moins environ 3 % poids, de préférence 5 à 45 % poids, et de manière plus préférée d'environ 10 à 30 % poids par rapport au poids total de catalyseur.

Le cobalt et éventuellement les éléments promoteurs sont dispersés sur un support qui comprend généralement de l'alumine, de la silice ou de l'oxyde de titane, et qui peut contenir d'autres oxydes tels que, par exemple, des oxydes de métaux alcalin, alcalino-terreux ou de terres rares.

Le catalyseur peut également contenir un autre métal, qui est soit actif en tant que catalyseur Fischer Tropsch, par exemple un métal des groupes 6 à 8 de la classification périodique des éléments tels que le ruthénium, soit un métal promoteur tels que le molybdène, le rhénium, le hafnium, le zirconium, le cérium ou l'uranium. Le(s) métal (métaux) promoteur(s) est (sont) habituellement présent(s) à raison d'au moins 0,05 : 1 par rapport au cobalt, de préférence d'au moins 0,1 : 1 et mieux encore de 0,1 : 1 à 1 : 1.

Par exemple il est possible d'utiliser un catalyseur contenant du cobalt, au moins un élément additionnel M choisi dans le groupe constitué par le molybdène et le tungstène et au moins un élément additionnel N choisi dans le groupe formé par les éléments des groupes Ia, IIa, Ib, le ruthénium, le palladium, l'uranium, le praséodyme et le néodyme, le cobalt. Les éléments M et N étant dispersés sur un support, ledit catalyseur étant de préférence préparé par gélification ainsi que le décrit le brevet FR-A-2.677.992. Il est aussi possible d'utiliser un catalyseur préparé par gélification contenant du cobalt, du ruthénium et du cuivre, ainsi que le décrit le brevet US-A-5.302.622. Mais tout catalyseur connu de l'homme du métier est aussi envisageable.

Le catalyseur est sous forme de poudre fine calibrée ayant un diamètre d'environ 10 à 700 μm souvent d'environ 10 à 200 μm, et le plus souvent d'environ 20 à 100 μm Il est utilisé en présence d'une phase gazeuse et d'une phase liquide. Dans le cas de la synthèse Fischer-Tropsch, tout liquide inerte ou effluent de la réaction peut convenir en tant que phase liquide. La phase liquide peut par exemple être constituée par un ou plusieurs hydrocarbures ayant au moins 5 atomes de carbone par molécule.

Le fonctionnement des colonnes à bulles requiert le contrôle de variables autres que la température, la pression et le rapport des gaz de synthèse. Le milieu liquide utilisé pour mettre en suspension le catalyseur peut ainsi être de manière générale n'importe quelle matière qui soit liquide aux températures et aux pressions d'exploitation, qui maintienne le catalyseur en suspension, qui soit relativement ou largement inerte dans les conditions réactionnelles et qui constitue un bon solvant pour les réactifs (tels que le monoxyde de carbone et l'hydrogène dans le cas de la synthèse Fischer-Tropsch). Comme matières appropriées dans le cas de la synthèse Fischer-Tropsch, on peut citer des paraffines saturées ou des polymères oléfiniques bouillant au-dessus d'environ 140 °C , de préférence d'au moins environ 280 °C. En outre, des milieux de suspension appropriés peuvent être des paraffines produites par réaction Fischer-Tropsch avec n'importe quel catalyseur de réaction Fischer-Tropsch, mieux encore des liquides qui bouillent au-dessus d'une température d'environ 350 °C , mieux encore à une température de 370 à 560°C. Au fur et à mesure que la réaction progresse, la paraffine locale, c'est-à-dire la paraffine produite par le procédé de la présente invention, remplacera la matière utilisée à des fins de démarrage et éventuellement le milieu de suspension sera de préférence de manière sensiblement complète, par exemple d'au moins 90 %, de la paraffine locale.

La charge de solides, c'est-à-dire le volume de catalyseur par volume de suspension ou de diluant, va jusqu'à environ 50 % et se situe de préférence dans une plage de 5 à 40 %.

Le gaz d'alimentation, qui comprend dans le cas de la synthèse Fischer-Tropsch de l'hydrogène et du monoxyde de carbone, peut être dilué avec une certaine quantité d'un autre gaz, c'est-à-dire le plus souvent à raison de moins d'environ 30 % en volume, de préférence de moins d'environ 20 % en volume, notamment de l'azote, du méthane ou du $CO_2$. Le gaz d'alimentation est habituellement introduit dans le fond du réacteur et barbote à travers celui-ci jusqu'au sommet du réacteur. L'emploi de niveaux plus élevés de gaz diluant non seulement limite la quantité maximum de produits formés par volume total de gaz acheminé au réacteur, mais nécessite également des stades de séparation coûteux pour éliminer le diluant des réactifs intéressants. La vitesse du gaz d'alimentation est habituellement aussi élevée que possible, tout en évitant la formation de mousse qui se produit lorsque des bulles de gaz ne se dégagent pas du liquide. On obtient donc un fonctionnement stable lorsque le gaz contenu dans la suspension n'augmente pas en fonction du temps ou n'augmente que légèrement. La formation de mousse se produit lorsque le temps de séjour du gaz augmente en fonction du temps. La charge de gaz peut être définie comme la fraction de gaz dans le mélange de suspension à trois phases. Les vitesses appropriées du gaz sont celles qui entraînent la mise en suspension des particules dans le milieu liquide et sont habituellement supérieures à environ 1 cm/seconde.

Les conditions réactionnelles pour les procédés de synthèse d'hydrocarbures sont généralement bien connues. Cependant, dans le cadre de la présente invention, les températures peuvent aller de 150 à 380 °C, de préférence de 180 à 350 °C, mieux encore de 190 à 300 °C. Les pressions sont normalement supérieures à environ 0,5 MPa, de préférence 0,5 à 5 MPa, mieux encore d'environ 1 à 4 MPa. L'augmentation de température accroît de manière générale la productivité, toutes choses restant égales par ailleurs; cependant, dans le cas de la synthèse Fischer-Tropsch, la sélectivité pour le méthane tend à augmenter et la stabilité du catalyseur à diminuer quand la température augmente. Ainsi dans un tel cas, bien que la conversion du CO augmente, le rendement en produits liquides souhaitables, par exemple, des produits en $C_5^+$, de préférence en $C_{10}^+$, peut ne pas être aussi important quand la température augmente. Le rapport de l'hydrogène au monoxyde de carbone peut également varier largement. Bien que le rapport stoechiométrique $H_2$ : CO pour les réactions de Fischer-Tropsch se rapproche de 2,1 : 1, la plupart des procédés en phase de suspension utilisent des rapports $H_2$ : CO relativement bas. Par exemple, le brevet U.S-A- 4.681.867 décrit des rapports d'exploitation préférés de l'hydrogène au monoxyde de carbone de 1 : 2 à 1 : 1,4. Les procédés du type à suspension utilisent de manière générale des rapports de $H_2$ : CO de moins de 1,0 (inclus) et mettent en évidence soit une moindre réactivité du catalyseur, soit des limitations de transfert massique sur le CO pénétrant dans la phase liquide. La présente invention n'est pas limitée à un rapport de $H_2$ : CO et, en fait, un rapport de $H_2$ : CO au niveau du rapport stoechiométrique ou à proximité de celui-ci est préféré. Ainsi, les rapports de $H_2$ : CO peuvent aller de 1 : 1 à 3 : 1, mieux encore de 1,2 : 1 à 2,5 : 1.

Sur la figure le réacteur R1 comporte une conduite 1 d'introduction du (ou des) réactif(s) gazeux dans un distributeur de bulles de gaz D1, une conduite 2 de sortie des gaz formés au cours de la réaction et des gaz résiduels non transformés au cours de la réaction, une conduite 3 de récupération d'une partie de la suspension. Le réacteur R1 comporte un échangeur de chaleur Ei alimenté par un fluide d'échange par la ligne 4 qui est récupéré par la ligne 5.

Sur la figure est schématisé un réacteur à circulation naturelle externe comportant une ligne 10 de recirculation de la suspension. La ligne 10 débouche dans une enceinte contenant une échangeur de chaleur EC alimenté en fluide caloporteur par la ligne 8. Le fluide caloporteur est récupéré après échange de chaleur par la ligne 9. La suspension refroidie quitte la zone d'échange de chaleur externe au réacteur R1 par la ligne 11 et est réintroduite dans le réacteur R1.

Les exemples suivant illustrent l'invention sans en limiter la portée.

EXEMPLE (COMPARARTIF)

Réacteur slurry à recirculation externe naturelle. Calcul de l'échangeur de chaleur et du débit de recirculation.

Un logiciel de calcul de réacteur a été spécialement développé pour le design d'un réacteur slurry pour la synthèse Fischer-Tropsch (voir exemple 2 pour la description détaillée de ce modèle). A l'aide de ce modèle numérique, nous avons vu que dans un réacteur de 5 mètres de diamètre et 15 mètres de hauteur, nous pouvons réaliser 91% de conversion d'un mélange de 27 T/h de gaz de synthèse. La chaleur à évacuer est de l'ordre de $32.10^6$ kcal/h.

Tableau 1:

| Calcul du réacteur | |
|---|---|
| Dimensions du réacteur | |
| Hauteur | 15 mètres |
| Diamètre | 5 mètres |
| Conditions opératoires | |
| Température entrée | 230°C |
| Température sortie | 243°C |
| Pression | 30 bar |
| Vitesse superficielle de gaz | 5 cm/s |
| Vitesse superficielle de liquide | 7,2 cm/s |
| Débit de liquide recirculé | 5100 $m^3$ /h |
| Caractéristiques du slurry | |
| Taux de rétention gazeuse moyen | 0,1 |
| Densité du slurry non aéré | 680 kg/$m^3$ |
| Densité du slurry aéré | 612 kg/$m^3$ |
| Force motrice gazosiphon | 0,100 bar |
| Performances | |
| Conversion | 91 % |
| Capacité du réacteur | 84 000 T/an |
| Chaleur dégagée par la réaction | $32.10^6$ kcal/h |
| Taux de rétention gazeuse moyen | 0,1 |

Le tableau 1 rassemble l'ensemble des conditions opératoires choisies pour le calcul du réacteur ainsi que ses performances. La différence de densité entre la phase liquide aérée et la phase liquide recirculée est de 68 kg/$m^3$, ce qui correspond à une force motrice d'entraînement pour le gazosiphon de 0,1 bar (1 bar = 0,1 MPa). Il s'agit donc maintenant de calculer un échangeur de chaleur pour évacuer la totalité de la chaleur de la réaction (soit $7.65 \cdot 10^6$ kJ/h) et pour lequel la perte de charge est inférieure à la force motrice d'entraînement du gazosiphon, soit 0,1 bar.

Tableau 2:

| Calcul de l'échangeur de chaleur | |
|---|---|
| Description du faisceau de tubes | |
| Hauteur | 15 mètres |
| Diamètre des tubes | 38 mm |
| Nombre de tubes | 1530 |
| Caractéristiques du fluide réfrigérant | |
| Nature | eau |
| Température | 190°C |
| Pression | 12,5 bar |
| Débit | 2500 T/h |
| Caractéristiques de l'effluent | |
| Température entrée calandre | 243 °C |
| Température sortie calandre | 230 °C |
| Débit | 5100 $m^3$ /h |

Tableau 2:   (suite)

| Calcul de l'échangeur de chaleur | |
|---|---|
| Perte de charge | 0,09 bar |

Un échangeur de hauteur 15 mètres comportant 1530 tubes de 38 mm de diamètre permet d'évacuer la chaleur de la réaction pour une circulation de liquide de 5100 m3/h rentrant à 243°C et sortant à 230°C. La perte de charge due à l'échangeur est de 0,09 bar, ce qui est parfaitement compatible avec la force ascensionnelle liée à la différence de densité entre la colonne de liquide aérée du réacteur et la colonne désaérée de l'échangeur, qui est de 0,1 bar. Ces calculs montrent la faisabilité de la mise en oeuvre du procédé.

Comparaison de la productivité d'un réacteur slurry opérant avec une recirculation de la phase liquide avec celle d'une colonne à bulles classique de même taille, pour la synthèse Fischer-Tropsch - Cas d'un réacteur isotherme à co-courant ascendant de gaz et de liquide.

Cette comparaison est basée sur des résultats numériques obtenus avec un logiciel de calcul de réacteur spécialement développé pour le design d'un réacteur slurry pour la synthèse Fischer-Tropsch. Le modèle utilisé pour cette étude est un modèle de dispersion axiale, dont les équations sont les suivantes:

$$-\frac{d}{dz}\left(\frac{\varepsilon_i.D_i}{u_i}.\frac{d}{dz}F_j^i\right) + \frac{d}{dz}F_j^i = \pm(k_La)_i.\left[C_j^* - C_j\right] + \nu_{ij}.r$$

i: indice représentant la phase gaz ou la phase liquide

j: indice du constituant sur lequel est effectué le bilan de matière (CO, $H_2$, $H_2O$)

Cj: concentration de j dans la phase liquide

Cj*: concentration à l'équilibre de j dans la phase liquide

r: vitesse de la réaction de synthèse

$\varepsilon_i$: taux de rétention de la phase i

$u_i$: vitesse superficielle dans la phase i

$F_j^i$: flux molaire de j dans la phase i

$\nu_{ij}$: coefficient stoechiométrique du constituant j dans la phase i pour la réaction de synthèse Fischer-Tropsch

$(k_La)_j$: coefficient de transfert de masse gaz-liquide pour le composé j

Di: coefficient de dispersion dans la phase liquide.

A l'aide de ce modèle numérique, nous avons calculé et comparé la productivité en paraffines produites d'une colonne à bulles de taille industrielle classique avec celle d'une colonne à bulles selon l'invention, équipée d'un cylindre directeur (draft tube). La colonne à bulles a une hauteur de 30 m et un diamètre de 7 m.

Conditions opératoires choisies:

Température : 240°C
Pression: 30 bars
Vitesse linéaire de gaz: variable entre 5-20 cm/s (voir tableau 3) $H_2/CO=2,0$

catalyseur à base de cobalt sur silice contenant comme promoteur du molybdène et du ruthénium.

Tableau 3

| Vitesse linéaire de gaz et conversion obtenue | | |
|---|---|---|
| type de réacteur | Vitesse linéaire de gaz (cm/s) | Conversion (%) |
| Réacteur à bulles classique (sans recirculation) | 5 | 95,8 |
| | 6 | 94,7 |
| | 7 | 93,5 |
| | 8,5 | 91,3 |
| | 10,5 | 87,3 |
| | 12,5 | 81,8 |
| | 15 | 73,4 |
| | 20 | 56,6 |
| Colonne à bulles avec recirculation interne de liquide | 10 | 97,8 |
| | 11,5 | 94,6 |
| | 13 | 87,5 |
| | 14 | 81,4 |
| | 16 | 70 |
| | 18 | 60,5 |
| | 20 | 52,9 |

**Revendications**

1. Procédé de mise en oeuvre d'une réaction exothermique dans un réacteur triphasique à bulles contenant une suspension de particules solides de diamètre compris entre 10 et 700 µm au sein d'un liquide aéré par une phase gaz et comprenant au moins un échangeur de chaleur interne au réacteur et au moins un échangeur de chaleur dans une boucle de recirculation, ce dernier étant soit inclus dans l'enceinte du réacteur dans le cas d'un dispositif comprenant un moyen de recirculation naturelle interne au réacteur, soit externe dans les autres cas, dans lequel on injecte, sous forme de bulles, à proximité de l'extrémité inférieure dudit réacteur une phase gazeuse contenant le (ou les) réactif(s) nécessaire(s) à la production des produits recherchés et on établit une recirculation naturelle à co-courant de ladite phase gazeuse d'au moins une partie de ladite suspension non aérée prélevée à proximité d'une extrémité dudit réacteur et réintroduite à proximité de l'autre extrémité dudit réacteur avec un débit de suspension recirculée compris entre 1 et 80000 m³/h dans le cas d'une recirculation externe et une vitesse $U_\ell$ de la suspension en circulation de 1 cm/s à 5 m/s et au moins égale à la vitesse de sédimentation $U_s$ des particules solides, ladite recirculation étant induite par la différence de densité entre la suspension aérée par la phase gaz et la suspension recirculée non aérée.

2. Procédé selon la revendication 1 dans lequel la recirculation est effectuée au moyen d'une boucle de recirculation externe au réacteur.

3. Procédé selon la revendication 1 dans lequel la recirculation naturelle est interne au réacteur.

4. Procédé selon l'une des revendications 1 à 3 dans lequel les particules solides ont un diamètre compris entre 10 et 200 µm.

5. Procédé selon l'une des revendications 1 à 3 dans lequel les particules solides ont un diamètre compris entre 20 et 100 µm.

**6.** Procédé selon l'une des revendications 1 à 5 dans lequel la vitesse du liquide $U_\ell$ au sein du réacteur est supérieure à la vitesse de sédimentation $U_s$ des particules solides.

**7.** Procédé selon l'une des revendications 1 à 7 dans lequel on recycle une suspension exempte de fraction solide après séparation de ladite fraction.

**8.** Procédé selon la revendication 7 dans lequel la séparation de la fraction solide est une filtration.

**9.** Procédé selon l'une des revendications 1 à 8 dans lequel la réaction est opérée à une température élevée supérieure à 100°C et sous une pression absolue supérieure à 0,1 MPa.

**10.** Procédé selon l'une des revendications 1 à 9 dans lequel la réaction est une hydrogénation ou une aromatisation ou une hydrodésulfuration ou une hydrodénitrogénation ou un hydrotraitement ou une hydroformylation.

**11.** Procédé selon l'une des revendications 1 à 10 dans lequel les particules solides comprennent un catalyseur convenant à l'hydrogénation du monoxyde de carbone pour la production d'hydrocarbures.

**12.** Procédé selon l'une des revendications 1 à 11 dans lequel le liquide est constitué de paraffines produites par réaction Fischer-Tropsch, et le solide est un catalyseur de la réaction Fischer-Tropsch.


**Patentansprüche**

**1.** Verfahren zur Durchführung einer exothermen Reaktion in einem triphasischen Reaktor mit Blasen (Slurry Bubble Column Reactor), der eine Suspension fester Partikel mit einem Durchmesser zwischen 10 bis 700 μm in einer durch eine Gasphase belüfteten Flüssigkeit enthält, und wenigstens einen Wärmetauscher in dem Reaktor und wenigstens einen Wärmetauscher in einer Rezyklierungsschleife umfasst, welche letztere entweder in der Reaktoreinfassung im Falle einer Vorrichtung, die ein Mittel zum natürlichen Rezyklieren in dem Reaktor umfasst, enthalten ist oder außerhalb in den anderen Fällen, wobei,
eine Gasphase, die das (oder die) Reagenz(ein), welche zur Erzeugung der gewünschten Produkte nötig ist, als Blasen nahe des unteren Endes des Reaktors eingespritzt wird und eine natürliche Rezyklierung, welche gleichläufig mit der Gasphase ist, von wenigstens einem Teil der nichtbelüfteten Suspension etabliert wird, welche nahe eines Endes des Reaktors entfernt wird und nahe des anderen Endes des Reaktors wiedereingeführt wird, mit einem Durchsatz an rezyklierter Suspension zwischen 1 und 80000 m$^3$/h im Falle einer externen Rezyklierung und einer Geschwindigkeit $U_l$ der zirkulierenden Suspension von 1cm/s bis 5 m/s und wenigstens gleich der Sedimentationsgeschwindigkeit $U_s$ der festen Partikel, wobei die Rezyklierung durch die Dichtedifferenz zwischen der durch die Gasphase belüfteten Suspension und der rezyklierten nichtbelüfteten Suspension eingeführt wird.

**2.** Verfahren nach Anspruch 1, wobei die Rezyklierung mittels einer Rezyklierungsschleife außerhalb des Reaktors geschieht.

**3.** Verfahren nach Anspruch 1, wobei eine natürliche Rezyklierung innerhalb des Reaktors geschieht.

**4.** Verfahren nach einem der Ansprüche 1 bis 3, wobei die festen Partikel einen Durchmesser zwischen 10 und 200 μm haben.

**5.** Verfahren nach einem der Ansprüche 1 bis 3, wobei die festen Partikel einen Durchmesser zwischen 20 und 100 μm haben.

**6.** Verfahren nach einem der Ansprüche 1 bis 5, wobei die Geschwindigkeit $U_l$ der Flüssigkeit in dem Reaktor größer ist als die Sedimentationsgeschwindigkeit $U_s$ der festen Partikel.

**7.** Verfahren nach einem der Ansprüche 1 bis 6, wobei eine Suspension, welche frei von fester Fraktion ist, nach Trennung der Fraktion rezykliert wird.

**8.** Verfahren nach Anspruch 7, wobei die Trennung der festen Fraktion eine Filtration ist.

**9.** Verfahren nach einem der Ansprüche 1 bis 8, wobei die Reaktion bei einer hohen Temperatur über 100°C und einem Absolutdruck über 0,1 MPa durchgeführt wird.

10. Verfahren nach einem der Ansprüche 1 bis 9, wobei die Reaktion eine Hydrierung oder Aromatisierung oder Hydrierentschwefelung oder Hydrierdenitrifizierung oder ein Hydrotreatment oder eine Hydroformylierung ist.

11. Verfahren nach einem der Ansprüche 1 bis 10, wobei die festen Partikel einen Katalysator umfassen, der zur Hydrierung von Kohlenmonoxid für die Produktion von Kohlenwasserstoffen geeignet ist.

12. Verfahren nach einem der Ansprüche 1 bis 11, wobei die Flüssigkeit aus Paraffinen besteht, die durch die Fischer-Tropschreaktion erzeugt werden, und der Feststoff ein Katalysator der Fischer-Tropschreaktion ist.

**Claims**

1. A process for operating an exothermic reaction in a slurry bubble column reactor containing a suspension of solid particles having a diameter in the range 10 to 700 µm inside a liquid aerated by a gas phase and comprising at least one heat exchanger internal to the reactor and at least one heat exchanger in the recirculation loop, the latter being located either inside the reactor, in the case of an apparatus comprising a mean for naturally established recycling inside the reactor, or outside in the other cases, wherein,
a gaseous phase containing reactant(s) required for the production of the desired products is injected as bubbles close to the lower extremity of said reactor, and
a natural recirculation, which is co-current of said gas phase, of at least a portion of the non-aerated suspension extracted from the reactor close to one extremity of said reactor is established, and reintroduced close to the other extremity of said reactor,
with a flow rate of recycled suspension comprised between 1 and 80 000 m3/h in the case of an external recycling and a flow rate Ul of the circulating suspension of 1 cm/s to 5 m/s and at least equal to the rate of sedimentation Us of the solid particles, said recirculation being induced by the difference in density between the suspension aerated by the gas phase and the non aerated recirculated suspension.

2. A process according to claim 1 wherein recirculation is performed by means of a recirculation loop external to the reactor.

3. A process according to claim 1 wherein natural recirculation is internal to the reactor.

4. A process according to any one of claims 1 to 3 wherein solid particles have a diameter comprised between 10 and 200 µm.

5. A process according to any one of claims 1 to 3 wherein solid particles have a diameter comprised between 20 and 100 µm.

6. A process according to any one of claims 1 to 5 wherein the flow rate Ul of liquid inside the reactor is greater than the rate of sedimentation Us of the solid particles.

7. A process according to any one of claims 1 to 6 wherein a suspension which is free of the solid fraction is recycled, after separation of said fraction.

8. A process according to claim 7 wherein said separation of said solid fraction is a filtration.

9. A process according to any one of claims 1 to 8 wherein the reaction is carried out at a temperature higher than 100°C and an absolute pressure higher than 0.1 MPa.

10. A process according to any one of claims 1 to 9 wherein the reaction is hydrogenation or aromatisation or hydrodesulfuration or hydrodenitrogenation or hydrotreatment or hydroformylation.

11. A process according to any one of claims 1 to 10 wherein the solid particles comprise a catalyst suitable for hydrogenating carbon monoxide to produce hydrocarbons.

12. A process according to any one of claims 1 to 11 wherein the liquid is constituted by paraffins produced by the Fischer-Tropsch reaction, and the solid is a catalyst for the Fischer-Tropsch reaction.

FIG.